# EUROPEAN PATENT APPLICATION

(11) **EP 3 410 373 A1**
(43) Date of publication of application: **05.12.2018**
(21) Application number: 17743632.6
(22) Date of filing: 18.01.2017
(51) Int. Cl.: G06Q 20/06, G06Q 30/02, H04L 12/58, G06Q 30/06

(54) **RESOURCE SHARING METHOD, RESOURCE ACQUISITION METHOD, TERMINAL AND SERVER**

(30) Priority: 28.01.2016 CN 201610059620
(71) Applicant: Tencent Technology (Shenzhen) Company Limited, Shenzhen, Guangdong 518057 (CN)
(72) Inventor: CHEN, Shan, Shenzhen Guangdong 518057 (CN); LI, Jianli, Shenzhen Guangdong 518057 (CN); HE, Chang, Shenzhen Guangdong 518057 (CN); SHI, Wei, Shenzhen Guangdong 518057 (CN); ZHONG, Yanxue, Shenzhen Guangdong 518057 (CN); HUANG, Yehui, Shenzhen Guangdong 518057 (CN); LIN, Qianqian, Shenzhen Guangdong 518057 (CN); CHEN, Yi, Shenzhen Guangdong 518057 (CN); ZHANG, Yumiao, Shenzhen Guangdong 518057 (CN); YANG, Yifan, Shenzhen Guangdong 518057 (CN); LI, Chuanqing, Shenzhen Guangdong 518057 (CN); WU, Zhenquan, Shenzhen Guangdong 518057 (CN); DAI, Xingxing, Shenzhen Guangdong 518057 (CN)
(74) Representative: V.O.
(86) International application number: PCT/CN2017/071557
(87) International publication number: WO 2017/129017

(57) **Abstract**

A resource sharing method includes: receiving a resource sharing message configuration file that is delivered in a pre-configured delivery time period; obtaining a theme activity time period according to the resource sharing message configuration file; displaying a resource sharing message configuration portal in the theme activity time period; detecting an operation on the resource sharing message configuration portal, and entering a resource sharing message configuration page; obtaining, according to a configuration performed on the resource sharing message configuration page, a resource sharing message template matching the theme activity time period and resource information matching the resource sharing message template; generating a resource sharing message according to the obtained resource sharing message template and resource information, the resource sharing message including data for obtaining a resource; and sharing the resource sharing message.

## Description

### RELATED APPLICATION

This application claims priority to Chinese Patent Application No. 201610059620.1, filed with the Chinese Patent Office on January 28, 2016 and entitled "RESOURCE SHARING METHOD, SYSTEM, AND RESOURCE OBTAINING METHOD", which is incorporated herein by reference in its entirety.

### FIELD OF THE TECHNOLOGY

This application relates to the field of network technologies, and in particular, to a resource sharing method, a resource obtaining method, a terminal, and a server.

### BACKGROUND OF THE DISCLOSURE

A resource includes a virtual object and a physical object, and the virtual object, is for example, an account numeric value, points, or an electronic voucher. An owner of resource may share the resource by using a social network, and a user with permission can obtain the shared resource. Sharing the resource on the social network can increase interaction between users, so as to maintain an existing relationship chain and establish a new social networking relationship chain.

However, when the owner of the current resource shares the resource, content of generated resource sharing message is the same, and is difficult to be identified. In addition, the resource sharing message only has a function of triggering a resource obtaining action, but cannot convey more useful information.

### SUMMARY

According to various embodiments of this application, a resource sharing method, a resource obtaining method, a terminal, and a server are provided.

A resource sharing method, including:
receiving a resource sharing message configuration file that is delivered in a pre-configured delivery time period;
obtaining a theme activity time period according to the resource sharing message configuration file;
displaying a resource sharing message configuration portal in the theme activity time period;
detecting an operation on the resource sharing message configuration portal, and entering a resource sharing message configuration page;
obtaining, according to a configuration performed on the resource sharing message configuration page, a resource sharing message template matching the theme activity time period and resource information matching the resource sharing message template;
generating a resource sharing message according to the obtained resource sharing message template and resource information, the resource sharing message including data for obtaining a data; and
sharing the resource sharing message.

A resource sharing method, including:
obtaining a pre-configured resource sharing message configuration file;
delivering the resource sharing message configuration file in a pre-configured delivery time period, so that a terminal that receives the resource sharing message configuration file obtains a theme activity time period according to the resource sharing message configuration file, and the terminal obtains, in the theme activity time period, a resource sharing message template matching the theme activity time period and resource information matching the resource sharing message template;
receiving a resource sharing message that is generated according to the resource sharing message template and the resource information and that is sent by the terminal, wherein the resource sharing message includes data for obtaining a resource; and
sharing the resource sharing message.

A resource sharing method, including:
receiving a resource sharing message;
obtaining a resource sharing message template corresponding to the resource sharing message and resource information matching the resource sharing message template, wherein the resource sharing message template matches a theme activity time period;
displaying the resource sharing message template;
obtaining an operation instruction for the displayed resource sharing message template;
generating, according to the operation instruction, a resource obtaining request that includes a resource obtaining party identifier; and
sending the resource obtaining request to a server, so that the server allocates a resource to the resource obtaining party identifier according to the resource information.

A terminal, including a memory and a processor, the memory storing a computer readable instruction, and the instruction, when executed by the processor, causing the processor to perform the following steps:
receiving a resource sharing message configuration file that is delivered in a pre-configured delivery time period;
obtaining a theme activity time period according to the resource sharing message configuration file;
displaying a resource sharing message configuration portal in the theme activity time period;
detecting an operation on the resource sharing message configuration portal, and entering a resource sharing message configuration page;
obtaining, according to a configuration performed on the resource sharing message configuration page, a resource sharing message template matching the theme activity time period and resource information matching the resource sharing message template;
generating a resource sharing message according to the obtained resource sharing message template and resource information, the resource sharing message including data for obtaining a resource; and
sharing the resource sharing message.

A server, including a memory and a processor, the memory storing a computer readable instruction, and the instruction, when executed by the processor, causing the processor to perform the following steps:
obtaining a pre-configured resource sharing message configuration file;
delivering the resource sharing message configuration file in a pre-configured delivery time period, so that a terminal that receives the resource sharing message configuration file obtains a theme activity time period according to the resource sharing message configuration file, and the terminal obtains, in the theme activity time period, a resource sharing message template matching the theme activity time period and resource information matching the resource sharing message template;
receiving a resource sharing message that is generated according to the resource sharing message template and the resource information and that is sent by the terminal, wherein the resource sharing message includes data for obtaining a resource; and
sharing the resource sharing message.

Details of one or more embodiments of this application are provided in the following accompanying drawings and descriptions. Other features, objectives, and advantages of the present disclosure are obvious in this specification, the accompanying drawings, and the claims.

### BRIEF DESCRIPTION OF THE DRAWINGS

To describe the technical solutions according to the embodiment of the present invention or in the prior art more clearly, the accompanying drawings for describing the embodiments or the prior art are introduced briefly in the following. Obviously, the drawings described in the following are only some embodiments of the present invention, and persons of ordinary skill in the art can obtain other drawings according to the accompanying drawings without creative efforts.
FIG. 1 is a schematic diagram of an application environment of a resource sharing system according to an embodiment;
FIG. 2 is a schematic structural diagram of a terminal for implementing a resource sharing method and a resource obtaining method according to an embodiment;
FIG. 3 is a schematic structural diagram of a server according to an embodiment;
FIG. 4 is a schematic flowchart of a resource sharing method according to an embodiment;
FIG. 5 is a schematic diagram of a session page according to an embodiment;
FIG. 6 shows a resource sharing message configuration page 1 according to an embodiment;
FIG. 7 shows a resource sharing message configuration page 2 according to an embodiment;
FIG. 8 shows a resource sharing message configuration page 3 according to an embodiment;
FIG. 9 shows a resource sharing message configuration page 4 according to an embodiment;
FIG. 10 shows obtaining, according to a configuration performed on the resource sharing message configuration page, a resource sharing message template matching the theme activity time period and resource information matching the resource sharing message template, according to an embodiment;
FIG. 11 is a schematic flowchart of steps of obtaining a resource share by means of payment according to an embodiment;
FIG. 12 is a schematic diagram of a payment page according to an embodiment;
FIG. 13 is a schematic flowchart of steps of obtaining a resource according to an embodiment;
FIG. 14 is a schematic diagram of displaying a resource sharing message image on a session page according to an embodiment;
FIG. 15 is a schematic diagram of displaying a resource obtaining result on a result display page according to an embodiment;
FIG. 16 is a schematic flowchart of a resource sharing method according to another embodiment; and
FIG. 17 is a schematic flowchart of a resource obtaining method according to an embodiment.

### DESCRIPTION OF EMBODIMENTS

To make the objectives, technical solutions, and advantages of this application clearer, the following further describes this application in detail with reference to the accompanying drawings and the embodiments. It should be understood that the specific embodiments described herein are merely used to explain this application but are not intended to limit this application.

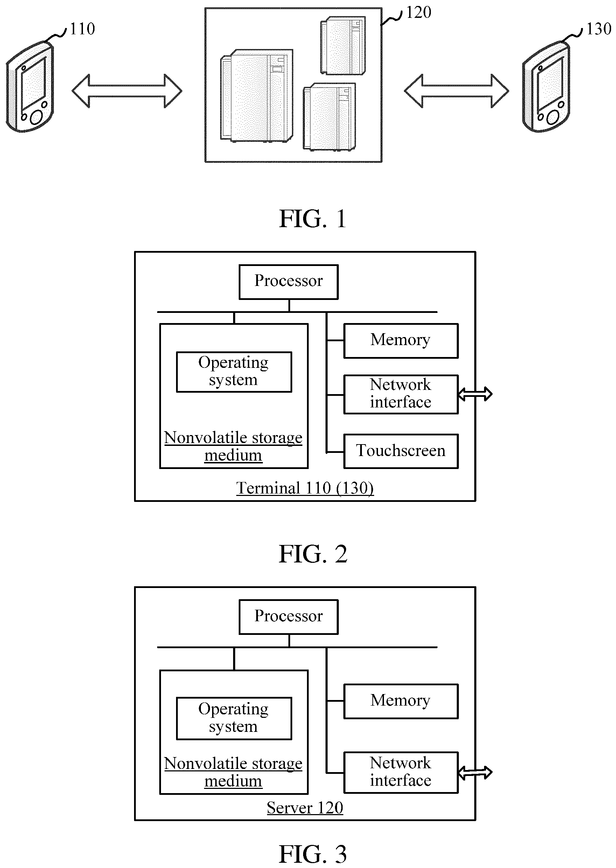

As shown in FIG. 1, in an embodiment, a resource sharing system is provided, and includes a first terminal 110, a server 120, and a second terminal 130. The server 120 may be an independent physical server or may be a physical server cluster. The server 120 may include a Content Delivery Network (CDN) server.

As shown in FIG. 2, in an embodiment, a terminal for implementing a resource sharing method or a resource obtaining method is provided and may be a first terminal 110 or a second terminal 130. The server includes a processor, a nonvolatile storage medium, a memory, a network interface, and a touchscreen that are connected by using a bus. The processor has a computing function and a function of controlling operation of the terminal 110, and the processor is configured to perform the resource sharing method or the resource obtaining method. The nonvolatile storage medium includes at least one of a magnetic storage medium, an optical storage medium, and a flash storage medium, and the nonvolatile storage medium stores the operating system. The network interface is configured to connect to the server 120. The touchscreen includes a touch layer and a display, and the display includes a liquid crystal display, a flexible display, and an e-ink display. The terminal includes a mobile terminal, a desktop computer, and the like. The mobile terminal includes at least one of a mobile phone, a tablet computer, a smartwatch, a personal digital assistant (PDA), and an e-reader that can be connected to a network.

As shown in FIG. 3, in an embodiment, a server 120 is provided and includes a processor, a nonvolatile storage medium, a memory, and a network interface. The processor is configured to perform a resource sharing method, and the nonvolatile storage medium stores an operating system. The network interface is used to connect to the first terminal 110 and the second terminal 130.

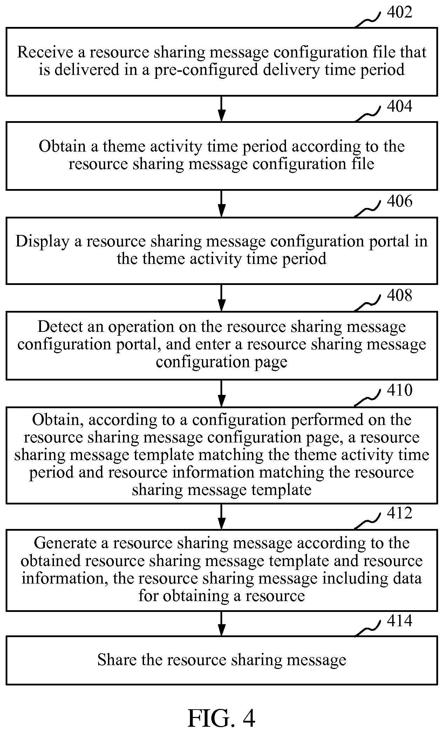

As shown in FIG. 4, in an embodiment, a resource sharing method is provided. This embodiment is described by using an example in which the method is applied to the first terminal 110 shown in FIG. 1. The method specifically includes following steps:

Step 402. Receive a resource sharing message configuration file that is delivered in a pre-configured delivery time period.

Specifically, the resource sharing message configuration file is a file recording a configuration parameter that is used to generate a resource sharing message, and may include one of a theme name, a theme identifier, a theme activity start time, a theme activity end time, a link address of a resource sharing message image, a resource sharing message text, and a resource information, or a combination thereof. The theme identifier is different from the theme name.

A server may provide an operation configuration page, obtain a configuration parameter according to a configuration operation in a configuration item on the operation configuration page, generate the resource sharing message configuration file according to the configuration parameter, obtain the delivery time period, and deliver the resource sharing message configuration file in the configured delivery time period. The delivery time period may be represented by a delivery start time and a delivery end time.

The resource is an object whose ownership can be obtained by using a network and includes at least one of a virtual object and a physical object. The virtual object includes at least one of an account value, a virtual image product, a virtual prepaid card, game equipment, and virtual currency. The physical object may be an object that can be arbitrarily owned by the user and that has an actual form, and is for example, an electronic product, a toy, an artifact, and a signed photo.

Step 404. Obtain a theme activity time period according to the resource sharing message configuration file.

Specifically, the theme activity time period is a time period of the resource sharing message that is generated by using the resource sharing method provided in this embodiment of this application and that has specified theme semantics. The theme activity time period may be represented by using the theme activity start time and the theme activity end time. The first terminal may directly read the theme activity time period from the resource sharing message configuration file, or may pull the theme activity time period from the server according to the link address in the resource sharing message configuration file.

Step 406. Display a resource sharing message configuration portal in the theme activity time period.

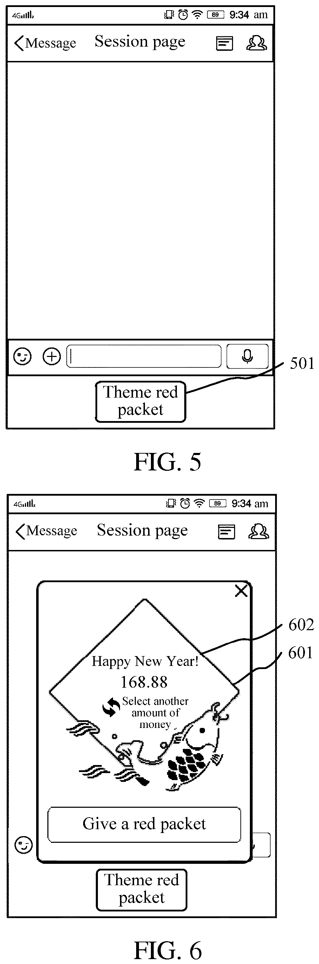

Specifically, the first terminal may display the resource sharing message configuration portal when a current time is greater than or equal to the theme activity start time, and end display of the resource sharing message configuration portal when the current time is greater than the theme activity end time. The resource sharing message configuration portal is used to trigger to enter a resource sharing message configuration page, to complete necessary configurations on the resource sharing message. The resource sharing message configuration portal may be represented in a form of an icon, a hyperlink, or a button. For example, the first terminal may display a session toolbar in a session page shown in FIG. 5, and display a resource sharing message configuration portal 501 in the session toolbar.

Step 408. Detect an operation on the resource sharing message configuration portal, and enter a resource sharing message configuration page.

Specifically, the first terminal detects a pre-defined operation acting on the resource sharing message configuration portal, and enters the resource sharing message configuration page if detecting the pre-defined operation. The resource sharing message configuration page may be in a form of a floating layer or a window. The pre-defined operation is, for example, a one-tap operation, a double-tap operation, a slide-operation, or a multi-touch operation.

Step 410. Obtain, according to a configuration performed on the resource sharing message configuration page, a resource sharing message template matching the theme activity time period and resource information matching the resource sharing message template.

Specifically, the resource sharing message configuration page may provide one or more configuration items for a user to perform configuration. After configuration is completed, a resource sharing message template having specified theme semantics and resource information having a mapping relationship with the resource sharing message template are obtained.

The resource sharing message template refers to information that needs to be displayed when the resource sharing message is displayed, and may include a resource sharing message image and a resource sharing message text. The resource sharing message image is an image displayed when the resource sharing message is displayed, and the resource sharing message text is a text, such as blessing words, displayed when the resource sharing message is displayed. The resource information is information about a resource that corresponds to the resource sharing message, and includes a resource share, such as a to-be-shared currency value; and the resource information may further include a resource type.

That the resource sharing message template has specified theme semantics means that the resource sharing message template conveys a specified theme idea in a form of images and/or words, so that a person may obtain the theme idea conveyed by the resource sharing message. The resource information has a mapping relationship with the resource sharing message template, so that the configuration on the to-be-shared resource can be rapidly completed, and the user does not need to enter the resource information character by character.

For example, referring to FIG. 6, a resource sharing message template includes a resource sharing message image 601 and a resource sharing message text 602. The resource sharing message image 601 includes an image of fish. In Chinese, a homophone of fish indicates a meaning of "remaining". Herein, fish is used to express the meaning of the homophone, and indicate a good wish that life is affluent and there are more wealth and food than necessary. This is a traditional theme idea for celebrating the Chinese Lunar New Year, and has theme semantics of expressing New Year's blessings. The resource sharing message text 602 expresses the theme semantics of the New Year's blessings in words. The theme semantics expressed by the resource sharing message image 601 is the same as that expressed by the resource sharing message text 602.

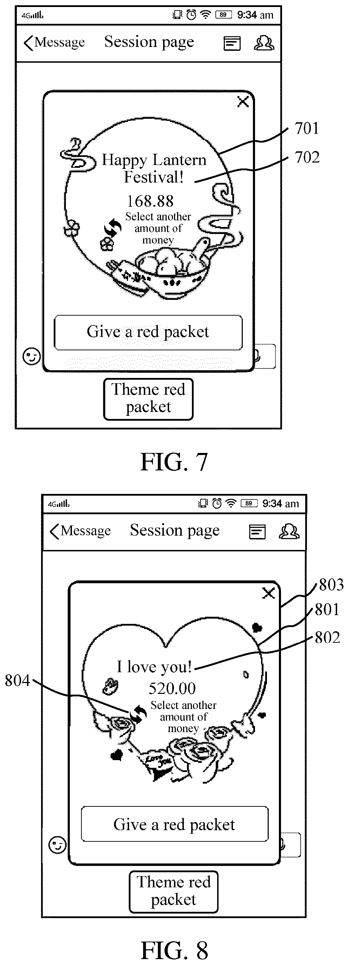

Referring to FIG. 7, a resource sharing message template includes a resource sharing message image 701 and a resource sharing message text 702. The resource sharing message image 701 expresses theme semantics of Lantern Festival blessings by means of food in a bowl in an image, and the resource sharing message text 702 expresses theme semantics of Lantern Festival blessings in words. The Lantern Festival is a Chinese traditional festival, and falls on the fifteen day of the Chinese Lunar New Year.

Referring to FIG. 8, a resource sharing message template includes a resource sharing message image 801 and a resource sharing message text 802. The resource sharing message image 801 expresses theme semantics of Valentine's Day blessings by means of heart shapes and roses that symbolizes love and that are in an image, and the resource sharing message text 802 expresses theme semantics related to love in words.

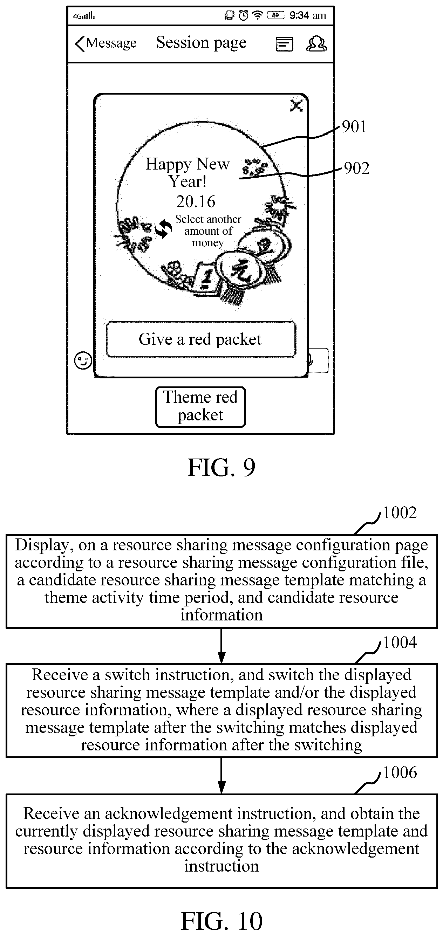

Referring to FIG. 9, a resource sharing message template includes a resource sharing message image 901 and a resource sharing message text 902. The resource sharing message image 901 expresses theme semantics of New Year blessings by means of a calendar and a lantern in an image, and the resource sharing message text 902 expresses theme semantics of New Year blessings in words.

Step 412. Generate a resource sharing message according to the obtained resource sharing message template and resource information, the resource sharing message including data for obtaining a resource.

The resource sharing message is used to trigger an action of obtaining a resource. The first terminal may generate the resource sharing message according to the obtained resource sharing message template and resource information, so that the generated resource sharing message has functions of obtaining a resource corresponding to the resource information and displaying the resource sharing message template.

Specifically, the generated resource sharing message may include the link address of the resource sharing message image, so that the first terminal may obtain and display the resource sharing message image according to the link address in the resource sharing message. The generated resource sharing message may include the resource sharing message text, so that the first terminal may display the resource sharing message text in the resource sharing message. The generated resource sharing message may further include the theme identifier, so that the first terminal may obtain and display a corresponding resource sharing message image and resource sharing message text according to the theme identifier. The generated resource sharing message may include the data for obtaining a resource, so that the first terminal may obtain a resource according to the data.

The data needed for obtaining a resource is data needed for obtaining a to-be-shared resource, and may include a resource identifier that is used to uniquely identify the to-be-shared resource; or may include a user identifier that is used to identify a user that initiates a resource sharing message; and may further include information about a validity period of the resource sharing message.

The first terminal may display the resource sharing message template on a social network propagation page of a social networking application. Specifically, the first terminal may draw and display the resource sharing message image on the social network propagation page, and display the resource sharing message text in a specified area of the resource sharing message image.

The social networking application is an application for network social networking and interaction based on a social network. The social networking application generally has a contact searching function and an instant messaging function, and may further have a user generated content (UGC) sharing function and a UGC commenting function. The social networking application may be an instant messaging application, a social network sites (SNS) application, or the like. The social network propagation page is a page, of the social networking application, that can be accessed by a social friend and that can propagate a message, and is for example, a session page, a UGC sharing page, or a personal page that can be accessed by the public. The session page includes a one-to-one session page and a group session page.

Step 414. Share the resource sharing message.

Specifically, the first terminal may propagate the resource sharing message by using a social network. Specifically, the first terminal propagates the resource sharing message by using a message channel of a social network. A propagation object is related to the type of the social network propagation page when resource sharing is currently triggered. For example, if the social network propagation page is the one-to-one session page, the propagation object may be an identifier of another user who is in a session with a current user; or if the social network propagation page is the group session page, the propagation object may be all group members except the current user identifier in a current group.

According to the resource sharing method, the resource sharing message configuration file that is delivered in the pre-configured delivery time period is received, and the server can flexibly control the delivery time period of the resource sharing message configuration file that is used to generate the resource sharing message. The theme activity time period is obtained according to the resource sharing message configuration file, so that display of the resource sharing message configuration portal may be controlled by using the theme activity time period, and the resource sharing message generated in the theme activity time period may be accurately and flexibly controlled. The resource sharing message is generated according to the resource sharing message template matching the theme activity time period and the corresponding resource information. Therefore, the resource sharing message including the data for obtaining a resource is shared, and a message receiving party can obtain semantics that match the theme activity time period and that are sent by a resource sharing party while obtaining a resource by using the resource sharing message, so that more amount of useful information is conveyed.

In an embodiment, step 402 specifically includes: receiving a resource sharing message configuration file that is delivered in the pre-configured delivery time period according to a corresponding delivery policy, wherein the delivery policy includes at least one of a delivery target user, a terminal operating system type, and a delivery target area.

Specifically, a server may provide an operation configuration page, obtain a configuration parameter according to a configuration operation in a configuration item on the operation configuration page, and generate the resource sharing message configuration file and a delivery policy according to the configuration parameter, so that the server delivers the resource sharing message configuration file to a first terminal according to the delivery policy. That the server delivers the resource sharing message configuration file according to the pre-configured delivery policy specifically means that the server delivers the resource sharing message configuration file in the delivery time period according to at least one of the delivery target user, the terminal operating system type, and the delivery target area.

The delivery policy includes at least one of the delivery target user, the terminal operating system type, and the delivery target area. The delivery target user may be represented in a target user identifier or a user attribute of a delivery target. The terminal operating system type is, for example, an iOS operating system or an Android operating system. Delivery target areas may be divided according to geographic factors or by administrative factors.

In this embodiment, by means of the pre-configured delivery policy, a policy of delivering the resource sharing message configuration file by the server to the terminal may be flexibly controlled, and a user group for resource allocation can be freely selected by using the resource sharing method provided in this embodiment of this application.

As shown in FIG. 10, in an embodiment, step 410 includes the following steps:
Step 1002. Display, on a resource sharing message configuration page according to a resource sharing message configuration file, a candidate resource sharing message template matching a theme activity time period, and candidate resource information.

Specifically, the first terminal obtains, according to the resource sharing message configuration file, and displays a candidate resource sharing message template having specified theme semantics, and obtains and displays candidate resource information matching the resource sharing message template. When the first terminal obtains, according to the resource sharing message configuration file, the candidate resource sharing message template having specified theme semantics, the first terminal may specifically download a resource sharing message image from a server according to an image link in the resource sharing message configuration file, or may directly read the resource sharing message image from the resource sharing message configuration file; and the first terminal may directly read a resource sharing message text from the resource sharing message configuration file. For example, referring to FIG. 8, the first terminal may display a resource sharing message image 801 and a resource sharing message text 802 on a resource sharing message configuration page 803.

Step 1004. Receive a switch instruction, and switch the displayed resource sharing message template and/or the displayed resource information, where a displayed resource sharing message template after the switching matches displayed resource information after the switching.

Specifically, the first terminal may display a switch control that is configured to trigger the switch instruction, and trigger the switch instruction on detecting a pre-defined operation on the switch control. After the switch instruction is received, at least one of the displayed resource sharing message template and the displayed resource information is switched according to the switch instruction. In FIG. 6, a resource share switching manner is used. After the switching is performed, the displayed resource sharing message template still has the specified theme semantics, and the displayed resource information and the displayed resource sharing message template still have a mapping relationship. The displayed resource sharing message template and resource information are a set.

For example, referring to FIG. 8, the first terminal displays a switch control 804, a user taps the switch control 804 to trigger a switch instruction, and the first terminal switches, according to the switch instruction, to another resource share, such as to a resource share that has the same specified semantics as "1314" or "52.00" has. In Chinese, "1314" pronounces similarly to an idiom expressing a lifetime and is used to express a good wish of the lifetime love; and in Chinese, "520" pronounces similarly to "I love you" and is used by lovers to express love.

Step 1006. Receive an acknowledgement instruction, and obtain the currently displayed resource sharing message template and resource information according to the acknowledgement instruction.

Specifically, the first terminal may display a confirm control configured to trigger an acknowledgement instruction, trigger the acknowledgement instruction after detecting a pre-defined operation on the confirm control, and obtain the currently displayed resource sharing message template and the currently displayed resource information according to the touch control instruction. The obtained resource sharing message template and resource information are used to generate a resource sharing message.

In this embodiment, a candidate resource sharing message template that has specified theme semantics and candidate resource information matching the candidate resource sharing message template are provided, switching is performed according to a switch instruction, and a finally selected resource sharing message template and finally selected resource information are confirmed according to the acknowledgement instruction. A user may be favored, to some extent, with a capability of making a choice as he wishes and the user does not need to perform more operations, and variety of the resource sharing message and convenience of operations may be also considered.

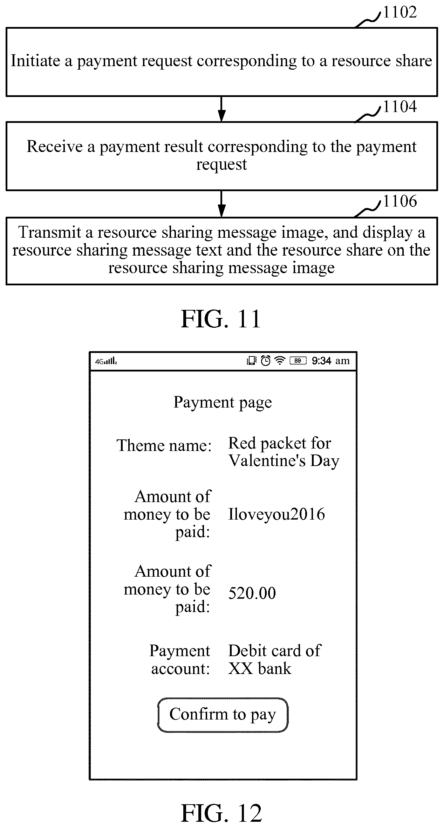

In an embodiment, the resource sharing message template includes a resource sharing message image and a resource sharing message text, and the resource information includes a resource share. The method further includes steps of obtaining the resource share by means of payment. Referring to FIG. 11, the method specifically includes the following steps:

Step 1102. Initiate a payment request corresponding to a resource share.

Step 1104. Receive a payment result corresponding to the payment request.

The first terminal may enter a payment page shown in FIG. 12, and obtain data needed for payment, so as to generate the payment request according to the data needed for payment, and send the payment request to a server or a third-party payment platform. The server or the third-party payment platform processes the payment request, and returns a payment result to the first terminal.

Specifically, the first terminal may obtain a payer account identifier and a payment amount corresponding to a resource share, generate a payment request carrying the payer account identifier and the payment amount, and send the payment request to the server or the third-party payment platform. The server or the third-party payment platform deducts, according to the payment request, the payment amount from a payment account corresponding to the payer account identifier, adds the payment amount to a pre-configured recipient account to complete payment, and returns, to the first terminal, a result indicating that the payment is successful.

Step 1106. Transmit a resource sharing message image, and display a resource sharing message text and the resource share on the resource sharing message image.

Specifically, after receiving the result indicating that the payment is successful, the first terminal transmits the resource sharing message image, and may specifically transmit the resource sharing message image to the second terminal by using the server. The first terminal and the second terminal may display the resource sharing message text and the resource share in a specified area of the resource sharing message image, and the first terminal still performs step 412. After receiving a result indicating that the payment fails, the first terminal prompts the user that the payment fails, and guides the user to re-perform the payment.

In this embodiment, the payment request is initiated, the resource sharing message image, the resource sharing message text, and the resource share are displayed on the social network propagation page after the result indicating that the payment succeeds is received, and a display effect of the resource sharing message on a message receiving end may be visually displayed.

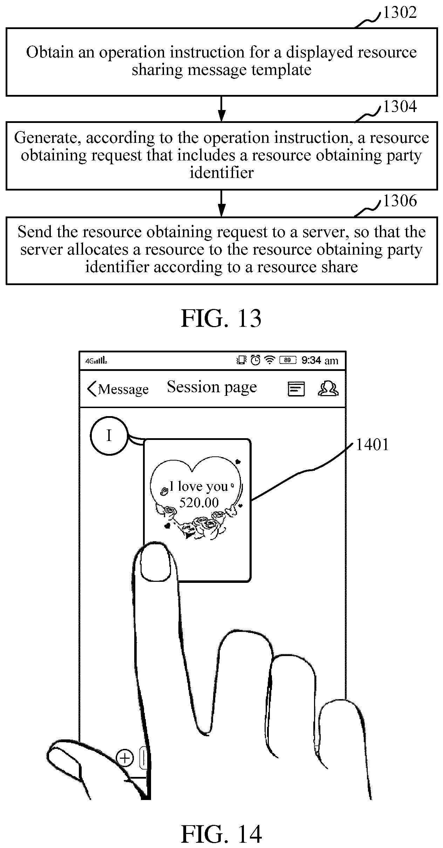

As shown in FIG. 13, in an embodiment, the resource sharing method further includes steps of obtaining a resource, and specifically includes the following steps:

Step 1302: Obtain an operation instruction for the displayed resource sharing message image.

Specifically, the first terminal detects a pre-defined operation on the displayed resource sharing message image, and triggers a corresponding operation instruction if detecting the pre-defined operation.

Step 1304. Generate, according to the operation instruction, a resource obtaining request that includes a resource obtaining party identifier.

Specifically, after obtaining the operation instruction, the first terminal may obtain a user identifier that currently logs in to a social networking application, as the resource obtaining party identifier, and obtain data, such as a resource identifier, that is used for obtaining a resource and that is in the resource sharing message, so as to generate the resource obtaining request carrying the resource obtaining party identifier. The resource obtaining party identifier is a unique identifier of a party requesting for obtaining a resource.

Step 1306. Send the resource obtaining request to a server, so that the server allocates a resource to the resource obtaining party identifier according to the resource share.

Specifically, the first terminal sends the resource obtaining request to the server, and the server obtains the resource identifier and the resource obtaining party identifier according to the resource obtaining request, so as to allocate, to the resource obtaining party identifier, the resource corresponding to the resource identifier. After receiving the resource obtaining request, the server determines whether there is a remaining share in the resource corresponding to the resource identifier, and if there is the remaining share, allocates, to the resource obtaining party identifier, a resource from the remaining resource, decreases a corresponding share, and feeds back, to the first terminal, a resource obtaining result indicating that the resource is successfully obtained; or if there is no remaining share, directly feeds back, to the first terminal, a resource obtaining result indicating that the resource is not successfully obtained.

When the server allocates a resource, if the resource is a resource that is to be allocated as per a value, such as a virtual red packet or a value of a prepaid card, when the server allocates a resource to the resource obtaining party identifier, the server may select a value from a preset value range randomly or according to a preset fixed value, and transfer the value into a value account corresponding to the resource obtaining party identifier. The value account includes a cash account or a voucher account, and the value account may be set on a bank server or a third-party payment server. If the resource is a resource that can be obtained after registration, such as a physical object, when the server allocates the resource to the resource obtaining party identifier, the server may record a correspondence between the resource and the resource obtaining party identifier to represent a ownership of a corresponding user on the resource, so that the resource is subsequently provisioned in other forms.

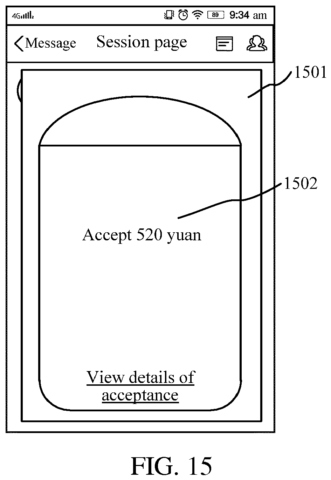

For example, referring to FIG. 14, a first terminal may display a resource sharing message image 1401 on a session page, and a user may trigger an operation instruction by tapping the resource sharing message image 1401, so as to trigger a resource obtaining request and send the resource obtaining request to a server. The server obtains a resource according to the resource obtaining request. After receiving a resource obtaining result fed back by the server, the first terminal may display a result display page 1501 shown in FIG. 15, and display a resource obtaining result 1502 on the result display page.

In this embodiment, by means of the operation instruction for the resource sharing message image, an action of obtaining a resource may be triggered and completed, so that the resource is conveniently shared.

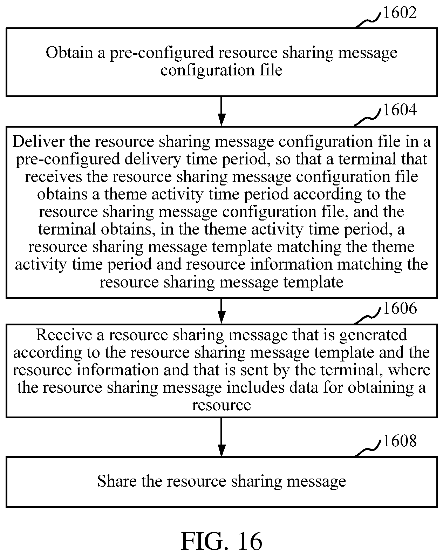

As shown in FIG. 16, in an embodiment, another resource sharing method is provided. This embodiment is described by using an example in which the method is applied to the server 120 in FIG. 1. A terminal that receives a resource sharing message configuration file in this embodiment is the first terminal 110 in the foregoing the embodiments, and this embodiment may further include various steps performed by the first terminal in the resource sharing method of the foregoing various embodiments. The resource sharing method of this embodiment specifically includes the following steps:

Step 1602. Obtain a pre-configured resource sharing message configuration file.

Step 1604. Deliver the resource sharing message configuration file in a pre-configured delivery time period, so that a terminal that receives the resource sharing message configuration file obtains a theme activity time period according to the resource sharing message configuration file, and the terminal obtains, in the theme activity time period, a resource sharing message template matching the theme activity time period and resource information matching the resource sharing message template.

Step 1606. Receive a resource sharing message that is generated according to the resource sharing message template and the resource information and that is sent by the terminal, wherein the resource sharing message includes data for obtaining a resource.

Step 1608. Share the resource sharing message.

In an embodiment, the step of delivering the resource sharing message configuration file in a pre-configured delivery time period includes: delivering the resource sharing message configuration file in the pre-configured delivery time period according to a corresponding delivery policy, wherein the delivery policy includes at least one of a delivery target user, a terminal operating system type, and a delivery target area.

In an embodiment, the resource sharing message template includes a resource sharing message image and a resource sharing message text, and the resource information includes a resource share; and the resource sharing method further includes: receiving a payment request that is initiated by the terminal and that corresponds to the resource share; and performing a payment operation according to the payment request, and feeding back a payment result to the terminal, so that the terminal transmits the resource sharing message image, and displays the resource sharing message text and the resource share in the resource sharing message image.

In an embodiment, the resource sharing method further includes: receiving a resource obtaining request that includes a resource obtaining party identifier and that is triggered after the terminal performs an operation on the displayed resource sharing message image; and allocating a resource to the resource obtaining party identifier according to the resource share.

According to the resource sharing method, the resource sharing message configuration file is delivered in the pre-configured delivery time period, and the delivery time period of the resource sharing message configuration file that is used to generate the resource sharing message can be flexibly controlled. The terminal obtains the theme activity time period according to the resource sharing message configuration file, so as to control, by using the theme activity time period, the resource sharing message that is generated in theme activity time period. The resource sharing message is generated according to the resource sharing message template matching the theme activity time period and the corresponding resource information. Therefore, the resource sharing message including the data for obtaining a resource is shared, and a message receiving party can obtain a resource by using the resource sharing message and obtain semantics that match the theme activity time period and that are sent by a resource sharing party, so that more amount of useful information is conveyed.

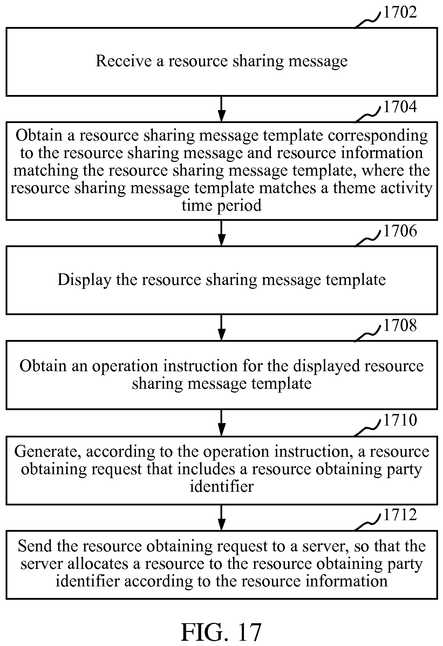

As shown in FIG. 17, in an embodiment, a resource obtaining method is provided. This embodiment is described by using an example in which the method is applied to the second terminal 110 shown in FIG. 1. The method specifically includes following steps:
Step 1702: Receive a resource sharing message. Specifically, the second terminal receives the resource sharing message that is generated and shared by the first terminal after the first terminal performs the resource sharing method.

Step 1704. Obtain a resource sharing message template corresponding to the resource sharing message and resource information matching the resource sharing message template, where the resource sharing message template matches a theme activity time period.

Specifically, the resource sharing message template refers to information that needs to be displayed when the resource sharing message is displayed, and may include a resource sharing message image and a resource sharing message text. The resource sharing message image is an image displayed when the resource sharing message is displayed, and the resource sharing message text is a text, such as blessing words, displayed when the resource sharing message is displayed. The resource information is information about a resource that corresponds to the resource sharing message, and includes a resource share, such as a to-be-shared currency value; and the resource information may further include a resource type.

The resource is an object whose ownership can be obtained by using a network and includes at least one of a virtual object and a physical object. The virtual object includes at least one of an account value, a virtual image product, a virtual prepaid card, game equipment, and virtual currency. The physical object may be an object that can be arbitrarily owned by the user and that has an actual form, and is for example, an electronic product, a toy, an artifact, and a signed photo.

That the resource sharing message template has specified theme semantics means that the resource sharing message template conveys a specified theme idea in a form of images and/or words, so that a person may obtain the theme idea conveyed by the resource sharing message. The resource information has a mapping relationship with the resource sharing message template, so that the configuration on the to-be-shared resource may be rapidly completed, and the user does not need to enter the resource information character by character.

Step 1706. Display the resource sharing message template.

Specifically, the second terminal may transmit a resource sharing message image, and display a resource sharing message text and the resource share on the resource sharing message image.

Step 1708. Obtain an operation instruction for the displayed resource sharing message template.

Specifically, the second terminal detects a pre-defined operation on the displayed resource sharing message image, and triggers a corresponding operation instruction if detecting the pre-defined operation.

Step 1710. Generate, according to the operation instruction, a resource obtaining request that includes a resource obtaining party identifier.

Specifically, after obtaining the operation instruction, the second terminal may obtain a user identifier that currently logs in to a social networking application, as the resource obtaining party identifier, and obtain data, such as a resource identifier, that is used for obtaining a resource and that is in the resource sharing message, so as to generate the resource obtaining request carrying the resource obtaining party identifier. The resource obtaining party identifier is a unique identifier of a party requesting for obtaining a resource.

Step 1712. Send the resource obtaining request to a server, so that the server allocates a resource to the resource obtaining party identifier according to the resource information.

Specifically, the second terminal sends the resource obtaining request to the server, and the server obtains the resource identifier and the resource obtaining party identifier according to the resource obtaining request, so as to allocate, to the resource obtaining party identifier, the resource corresponding to the resource identifier. After receiving the resource obtaining request, the server determines whether there is a remaining share in the resource corresponding to the resource identifier, and if there is the remaining share, allocates, to the resource obtaining party identifier, a resource from the remaining resource, and decreases a corresponding share, and feeds back a resource obtaining result indicating that the resource is successfully obtained to the second terminal; or if there is no remaining share, directly feeds back a resource obtaining result indicating that the resource is not successfully obtained to the second terminal.

When the server allocates a resource, if the resource is a resource that is to be allocated as per a value, such as a virtual red packet or a value of a prepaid card, when the server allocates a resource to the resource obtaining party identifier, the server may select a value from a preset value range randomly or according to a preset fixed value, and transfer the value into a value account corresponding to the resource obtaining party identifier. The value account includes a cash account or a voucher account, and the value account may be set on a bank server or a third-party payment server. If the resource is a resource that can be obtained after registration, such as a physical object, when the server allocates the resource to the resource obtaining party identifier, the server may record a correspondence between the resource and the resource obtaining party identifier to represent a ownership of a corresponding user on the resource, so that the resource is subsequently provisioned in other forms.

According to the resource obtaining method, after the resource sharing message is received, the resource sharing message template corresponding to the resource sharing message is displayed. The resource sharing message template matches the theme activity time period. Semantics that match the theme activity time period and that are sent by a resource sharing party are obtained while a resource is obtained by using the resource sharing message, so that more amount of useful information is conveyed.

In an embodiment, step 1704 includes: determining whether locally there is a resource sharing message image corresponding to the resource sharing message; and obtaining the local corresponding resource sharing message image if locally there is the resource sharing message image corresponding to the resource sharing message, where step 1706 includes: displaying the local corresponding resource sharing message image; ordisplaying a local default resource sharing message image and pulling, from the server, the resource sharing message image corresponding to the resource sharing message if locally there is no resource sharing message image corresponding to the resource sharing message, where step 1706 includes: updating the displayed default resource sharing message image to the pulled resource sharing message image.

Specifically, in this embodiment, the second terminal first determines whether locally there is the resource sharing message image corresponding to the resource sharing message, and directly displays the corresponding resource sharing message image if locally there is the resource sharing message image corresponding to the resource sharing message. If there is no resource sharing message image corresponding to the resource sharing message, to ensure that the user can immediately identify that the message is the resource sharing message image, the user first displays the local default resource sharing message image and then pulls the corresponding resource sharing message image from the server, and performs updating after the corresponding resource sharing message image is pulled.

According to this embodiment, display efficiency of the resource sharing message image can be ensured, and the resource sharing message is displayed after being received, to trigger the resource obtaining request, so that resource obtaining efficiency is improved while efficiency of displaying the resource sharing message image is improved.

In an embodiment, in a resource sharing system shown in FIG. 1, the resource sharing system includes a first terminal 110 and a server 120.

The server 120 is configured to deliver a resource sharing message configuration file in a pre-configured delivery time period. The first terminal 110 is configured to: receive the resource sharing message configuration file; obtain a theme activity time period according to the resource sharing message configuration file; display a resource sharing message configuration portal in the theme activity time period; detect an operation on the resource sharing message configuration portal, and enter a resource sharing message configuration page; obtain, according to a configuration performed on the resource sharing message configuration page, a resource sharing message template matching the theme activity time period and resource information matching the resource sharing message template; generate a resource sharing message according to the obtained resource sharing message template and resource information, the resource sharing message including data for obtaining a resource; and share the resource sharing message.

In an embodiment, the server 120 is further configured to receive a resource sharing message configuration file that is delivered in the pre-configured delivery time period according to a corresponding delivery policy, wherein the delivery policy includes at least one of a delivery target user, a terminal operating system type, and a delivery target area.

In an embodiment, the first terminal 110 is further configured to: display, on the resource sharing message configuration page according to the resource sharing message configuration file, a candidate resource sharing message template matching the theme activity time period and candidate resource information; receive a switch instruction, and switching the displayed resource sharing message template and/or the displayed resource information, wherein a displayed resource sharing message template after switching matches displayed resource information after switching; and receive an acknowledgement instruction, and obtaining the currently displayed resource sharing message template and resource information according to the acknowledgement instruction.In an embodiment, the resource sharing message template includes a resource sharing message image and a resource sharing message text, and the resource information includes a resource share. The first terminal 110 is further configured to: initiate a payment request corresponding to the resource share. The server 120 is further configured to: perform a payment operation according to the payment request and feed back a payment result to the first terminal. The first terminal 110 is further configured to: transmit the resource sharing message image, and display the resource sharing message text and the resource share on the resource sharing message image.

In an embodiment, the resource sharing system further includes a second terminal 130, configured to: receive a resource sharing message; obtain a resource sharing message template corresponding to the resource sharing message and resource information matching the resource sharing message template, wherein the resource sharing message template matches a theme activity time period; display the resource sharing message template; obtain an operation instruction for the displayed resource sharing message template; generate, according to the operation instruction, a resource obtaining request that includes a resource obtaining party identifier; and send the resource obtaining request to a server 120, so that the server 120 is further configured to allocate a resource to the resource obtaining party identifier according to the resource information.

In an embodiment, the second terminal 130 is further configured to: determine whether locally there is a resource sharing message image corresponding to the resource sharing message; and obtain the local corresponding resource sharing message image and display the local corresponding resource sharing message image if locally there is the resource sharing message image corresponding to the resource sharing message; or display a local default resource sharing message image, pulling, from the server, the resource sharing message image corresponding to the resource sharing message, and update the displayed default resource sharing message image to the pulled resource sharing message image if locally there is no resource sharing message image corresponding to the resource sharing message.

According to the resource sharing system, the resource sharing message configuration file that is delivered in the pre-configured delivery time period is received, and the server can flexibly control the delivery time period of the resource sharing message configuration file that is used to generate the resource sharing message. The theme activity time period is obtained according to the resource sharing message configuration file, so that display of the resource sharing message configuration portal may be controlled by using the theme activity time period, and the resource sharing message generated in the theme activity time period may be accurately and flexibly controlled. The resource sharing message is generated according to the resource sharing message template matching the theme activity time period and the corresponding resource information. Therefore, the resource sharing message including the data for obtaining a resource is shared, and a message receiving party can obtain a resource by using the resource sharing message and obtain semantics that match the theme activity time period and that are sent by a resource sharing party, so that more amount of useful information is conveyed.

Referring to FIG. 1, in a specific application scenario, a resource sharing message is a red packet message. A red packet is a gift having an attribute of a currency equivalent, and a virtual red packet is a red packet in an electronic format and is processed by a computer. An operation administrator logs in to a server, configures a red packet template of the red packet message, a theme activity time period, and an amount of the red packet, and generates a corresponding red packet message configuration file, and configures a delivery time period and a delivery policy for the red packet message configuration file, so that the server delivers the red packet message configuration file in the configured delivery time period according to the delivery policy.

The first terminal receives and stores the red packet message configuration file delivered by the server, and obtains the theme activity time period from the red packet message configuration file. In this theme activity time period, if the first terminal enters a session page shown in FIG. 5, a trigger button 501 of a theme red packet will be added when a toolbar is displayed. Assuming that the theme activity time period is a Valentine's Day theme activity time period, after a user taps the trigger button 501, the first terminal displays a Valentine's Day theme red packet template shown in FIG. 8. The Valentine's Day theme red packet template includes a red packet message text of the Valentine's Day theme, a red packet message image, and the amount of money in the red packet. The user taps "Switch to another amount", and the amount of money in the red packet will be changed. An amount of money in the red packet, obtained after switching still matches the Valentine's Day theme. The user confirms to send the red packet and enters a payment page shown in FIG. 12. After payment is completed on the payment page, the red packet message template is displayed on the session page, and the red packet message template is transmitted to a second terminal corresponding to a session object on the session page.

After receiving the red packet message template by using a social networking application, the second terminal draws the red packet message template and displays the red packet message template on the session page of the second terminal. The user taps the displayed red packet message template, obtains a user identifier that is on the second terminal and that logs in to the social networking application, and a red packet identifier corresponding to the red packet message template, and sends, to the server, a red packet amount obtaining request carrying the user identifier and the red packet identifier. The server transfers, according to the red packet amount obtaining request, red packet money corresponding to the red packet identifier to a money account corresponding to the user identifier.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may be a nonvolatile storage medium such as a magnetic disk, an optical disc, a read-only memory (ROM), or a random access memory (RAM).

Technical features of the foregoing embodiments may be arbitrarily combined. For brevity of the description, not all possible combinations of the technical features in the foregoing embodiments are described. However, as long as the combinations of the technical features are not contradicted, the combinations shall be considered as the scope recorded in this specification.

The foregoing embodiments only describe several implementations of this application, and their description is specific and detailed, but cannot therefore be understood as a limitation to the patent scope of the present disclosure. It should be noted that, a person of ordinary skill in the art may further make some variations and improvements without departing from the concept of this application, and the variations and improvements belong to the protection scope of this application. Therefore, the protection scope of this application should be subject to the protection scope of the appended claims.

## Claims

1. A resource sharing method, comprising:
receiving a resource sharing message configuration file that is delivered in a pre-configured delivery time period;
obtaining a theme activity time period according to the resource sharing message configuration file;
displaying a resource sharing message configuration portal in the theme activity time period;
detecting an operation on the resource sharing message configuration portal, and entering a resource sharing message configuration page;
obtaining, according to a configuration of the resource sharing message configuration page, a resource sharing message template corresponding to the theme activity time period, and obtaining resource information matching the resource sharing message template;
generating a resource sharing message according to the obtained resource sharing message template and the resource information, the resource sharing message comprising data for obtaining a resource; and
sharing the resource sharing message.

2. The method according to claim 1, wherein receiving the resource sharing message configuration file delivered in a pre-configured delivery time period comprises:
receiving the resource sharing message configuration file delivered in the pre-configured delivery time period according to a delivery policy, wherein the delivery policy comprises at least one of a delivery target user, a terminal operating system type, and a delivery target area.

3. The method according to claim 1, wherein obtaining, according to the configuration of the resource sharing message configuration page, the resource sharing message template matching the theme activity time period and the resource information matching the resource sharing message template comprises:
displaying, on the resource sharing message configuration page according to the resource sharing message configuration file, a candidate resource sharing message template matching the theme activity time period and candidate resource information;
receiving a switch instruction, and switching the displayed resource sharing message template and/or the displayed resource information, wherein a displayed resource sharing message template after the switching matches displayed resource information after the switching; and
receiving an acknowledgement instruction, and obtaining the currently displayed resource sharing message template and the currently displayed resource information according to the acknowledgement instruction.

4. The method according to claim 1, wherein the resource sharing message template comprises a resource sharing message image and a resource sharing message text, the resource information comprises a resource share; and the method further comprises:
initiating a payment request corresponding to the resource share;
receiving a payment result corresponding to the payment request; and
transmitting the resource sharing message image, and displaying the resource sharing message text and the resource share on the resource sharing message image.

5. A resource sharing method, comprising:
obtaining a pre-configured resource sharing message configuration file;
delivering the resource sharing message configuration file in a pre-configured delivery time period, so that a terminal that receives the resource sharing message configuration file obtains a theme activity time period according to the resource sharing message configuration file, and the terminal obtains, in the theme activity time period, a resource sharing message template matching the theme activity time period and resource information matching the resource sharing message template;
receiving a resource sharing message that is generated according to the resource sharing message template and the resource information and sent by the terminal, wherein the resource sharing message comprises data for obtaining a resource; and
sharing the resource sharing message.

6. The method according to claim 5, wherein delivering the resource sharing message configuration file in the pre-configured delivery time period comprises:
delivering the resource sharing message configuration file in the pre-configured delivery time period according to a delivery policy , wherein the delivery policy comprises at least one of a delivery target user, a terminal operating system type, and a delivery target area.

7. The method according to claim 5, wherein the resource sharing message template comprises a resource sharing message image and a resource sharing message text, the resource information comprises a resource share; and the method further comprises:
receiving a payment request that is initiated by the terminal and corresponds to the resource share; and
performing a payment operation according to the payment request, and feeding back a payment result to the terminal, so that the terminal transmits the resource sharing message image, and displays the resource sharing message text and the resource share in the resource sharing message image.

8. The method according to claim 7, further comprising:
receiving a resource obtaining request sent by the terminal in response to an operation on the displayed resource sharing message image, the resource obtaining request comprises a resource obtaining party identifier; and
allocating a resource to the resource obtaining party identifier according to the resource share.

9. A resource sharing method, comprising:
receiving a resource sharing message;
obtaining a resource sharing message template corresponding to the resource sharing message and obtaining resource information matching the resource sharing message template, wherein the resource sharing message template matches a theme activity time period;
displaying the resource sharing message template;
obtaining an operation instruction for the displayed resource sharing message template;
generating, according to the operation instruction, a resource obtaining request that comprises a resource obtaining party identifier; and
sending the resource obtaining request to a server which allocates a resource to the resource obtaining party identifier according to the resource information.

10. The method according to claim 9, wherein obtaining the resource sharing message template corresponding to the resource sharing message and obtaining the resource information matching the resource sharing message template comprises:
determining whether there is a resource sharing message image corresponding to the resource sharing message in a local machine; and
obtaining the resource sharing message image from the local machine when there is the resource sharing message image corresponding to the resource sharing message in the local machine, wherein displaying the resource sharing message template comprises: displaying the resource sharing message image obtained from the local machine; or
displaying a default resource sharing message image in the local machine and pulling the resource sharing message image corresponding to the resource sharing message from the server when there is no resource sharing message image corresponding to the resource sharing message in the local machine, wherein displaying the resource sharing message template comprises:
terminating displaying of the default resource sharing message image and displaying the resource sharing message image pulled from the server.

11. A terminal, comprising a memory and a processor, the memory storing a computer readable instruction, and the instruction, when executed by the processor, causing the processor to perform the following steps:
receiving a resource sharing message configuration file that is delivered in a pre-configured delivery time period;
obtaining a theme activity time period according to the resource sharing message configuration file;
displaying a resource sharing message configuration portal in the theme activity time period;
detecting an operation on the resource sharing message configuration portal, and entering a resource sharing message configuration page;
obtaining, according to a configuration of the resource sharing message configuration page, a resource sharing message template corresponding to the theme activity time period and obtaining resource information matching the resource sharing message template;
generating a resource sharing message according to the obtained resource sharing message template and the resource information, the resource sharing message comprising data for obtaining a resource; and
sharing the resource sharing message.

12. The terminal according to claim 11, wherein receiving the resource sharing message configuration file delivered in a pre-configured delivery time period comprises:
receiving the resource sharing message configuration file delivered in the pre-configured delivery time period according to a delivery policy, wherein the delivery policy comprises at least one of a delivery target user, a terminal operating system type, and a delivery target area.

13. The terminal according to claim 11, wherein obtaining, according to the configuration of the resource sharing message configuration page, the resource sharing message template matching the theme activity time period and the resource information matching the resource sharing message template comprises:
displaying, on the resource sharing message configuration page according to the resource sharing message configuration file, a candidate resource sharing message template matching the theme activity time period and candidate resource information;
receiving a switch instruction, and switching the displayed resource sharing message template and/or the displayed resource information, wherein a displayed resource sharing message template after the switching matches displayed resource information after the switching; and
receiving an acknowledgement instruction, and obtaining the currently displayed resource sharing message template and the currently displayed resource information according to the acknowledgement instruction.

14. The terminal according to claim 11, wherein the resource sharing message template comprises a resource sharing message image and a resource sharing message text, the resource information comprises a resource share; and the computer readable instruction, when executed by the processor, further causes the processor to perform the following steps:
initiating a payment request corresponding to the resource share;
receiving a payment result corresponding to the payment request; and
transmitting the resource sharing message image, and displaying the resource sharing message text and the resource share on the resource sharing message image.

15. The terminal according to claim 11, wherein the processor, when executed by the instruction, causes the processor to perform the following steps:
receiving a resource sharing message;
obtaining a resource sharing message template corresponding to the received resource sharing message and obtaining resource information matching the resource sharing message template corresponding to the received resource sharing message, wherein the resource sharing message template matches a theme activity time period;
displaying the resource sharing message template;
obtaining an operation instruction for the displayed resource sharing message template;
generating, according to the operation instruction, a resource obtaining request that comprises a resource obtaining party identifier; and
sending the resource obtaining request to a server which allocates a resource to the resource obtaining party identifier according to the resource information.

16. The terminal according to claim 15, wherein obtaining the resource sharing message template corresponding to the received resource sharing message and obtaining the resource information matching the resource sharing message template corresponding to the received resource sharing message comprises:
determining whether there is a resource sharing message image corresponding to the received resource sharing message in the terminal; and
obtaining the resource sharing message image corresponding to the resource sharing message in the terminal if there is the resource sharing message image corresponding to the received resource sharing message in the terminal, wherein displaying the resource sharing message template comprises: displaying the local corresponding resource sharing message image obtained from the terminal; or
displaying a default resource sharing message image in the terminal and pulling the resource sharing message image corresponding to the resource sharing message from the server if there is no resource sharing message image corresponding to the received resource sharing message in the terminal, wherein displaying the resource sharing message template comprises: terminate displaying the default resource sharing message image and displaying the resource sharing message image pulled from the server.

17. A server, comprising a memory and a processor, the memory storing a computer readable instruction, and the instruction, when executed by the processor, causing the processor to perform the following steps:
obtaining a pre-configured resource sharing message configuration file;
delivering the resource sharing message configuration file in a pre-configured delivery time period, so that a terminal that receives the resource sharing message configuration file obtains a theme activity time period according to the resource sharing message configuration file, and the terminal obtains, in the theme activity time period, a resource sharing message template matching the theme activity time period and resource information matching the resource sharing message template;
receiving a resource sharing message that is generated according to the resource sharing message template and the resource information and sent by the terminal, wherein the resource sharing message comprises data for obtaining a resource; and
sharing the resource sharing message.

18. The server according to claim 17, wherein delivering the resource sharing message configuration file in the pre-configured delivery time period comprises:
delivering the resource sharing message configuration file in the pre-configured delivery time period according to a delivery policy , wherein the delivery policy comprises at least one of a delivery target user, a terminal operating system type, and a delivery target area.

19. The server according to claim 17, wherein the resource sharing message template comprises a resource sharing message image and a resource sharing message text, the resource information comprises a resource share; and the computer readable instruction, when executed by one or more processors, further causes the processor to perform the following steps:
receiving a payment request that is initiated by the terminal and corresponds to the resource share; and
performing a payment operation according to the payment request, and feeding back a payment result to the terminal, so that the terminal transmits the resource sharing message image, and displays the resource sharing message text and the resource share in the resource sharing message image.

20. The server according to claim 19, wherein the computer readable instruction, when executed by one or more processors, further causes the one or more processors to perform the following steps:
receiving a resource obtaining request sent by the terminal in response to an operation on the displayed resource sharing message image, the resource obtaining request comprises a resource obtaining party identifier; and
allocating a resource to the resource obtaining party identifier according to the resource share.
